# EUROPEAN PATENT SPECIFICATION

(11) **EP 0 881 003 B1**
(45) Date of publication and mention of the grant of the patent: **31.03.2004**
(21) Application number: 98109278.6
(22) Date of filing: 22.05.1998
(51) Int. Cl.: B08B 5/02, B65G 45/22

(54) **Chain cleaning device**
Vorrichtung zum Reinigen von Ketten
Dispositif pour le nettoyage de chaînes

(30) Priority: 26.05.1997 IT BO970317
(43) Date of publication of application: 02.12.1998
(73) Proprietor: Sorbara, Giuseppe, 40068 S. Lazzaro di Savena (Bologna) (IT)
(72) Inventor: Sorbara, Giuseppe, 40068 S. Lazzaro di Savena (Bologna) (IT)
(74) Representative: Provvisionato, Paolo

(56) References cited:
- DE-A- 3 737 674
- DE-U- 29 601 457
- US-A- 2 885 068
- US-A- 4 210 977
- US-A- 5 372 242

## Description

The present invention relates to a chain cleaning device, particularly for use in dough driers.

It is known that there is a wide use of elements actuated by means of chains which are constituted in particular by rollers articulated by means of pairs of link plates.

Cleaning said chains is often difficult and can cause prolonged machine downtimes. This drawback is particularly felt in the case of chain elements used in dough driers, which are affected by the considerable impurities arising from the production processes.

The state of the art comprises an American application US-A-5,372,242 as defmed in the pre-characterizing part of claim 1.

The aim of the present invention is to solve the above problem by providing a device which allows to clean chains automatically, particularly in dough driers.

Within the scope of this aim, another object of the present invention is to provide a chain cleaning device which is simple in concept, safely reliable in operation and versatile in use.

This aim and this object are both achieved, according to the invention, by the present chain cleaning device, which is characterized in that it comprises channel-like guiding means along which a chain to be cleaned is suitable to travel; means for distributing a stream of cleaning air which is supplied under pressure to a conveyance element associated with said guiding means, at a short distance from said chain to be cleaned, and is adapted to pass through said chain in different directions; a scoop for said cleaning air stream, which is connected to openings formed in said guiding means opposite said means for distributing said air stream.

The details of the invention will become apparent from the following detailed description of a preferred embodiment of the chain cleaning device, illustrated only by way of non-limitative example in the accompanying drawings, wherein:
Figure 1 is a partially cutout sectional side view of the chain cleaning device according to the present invention;

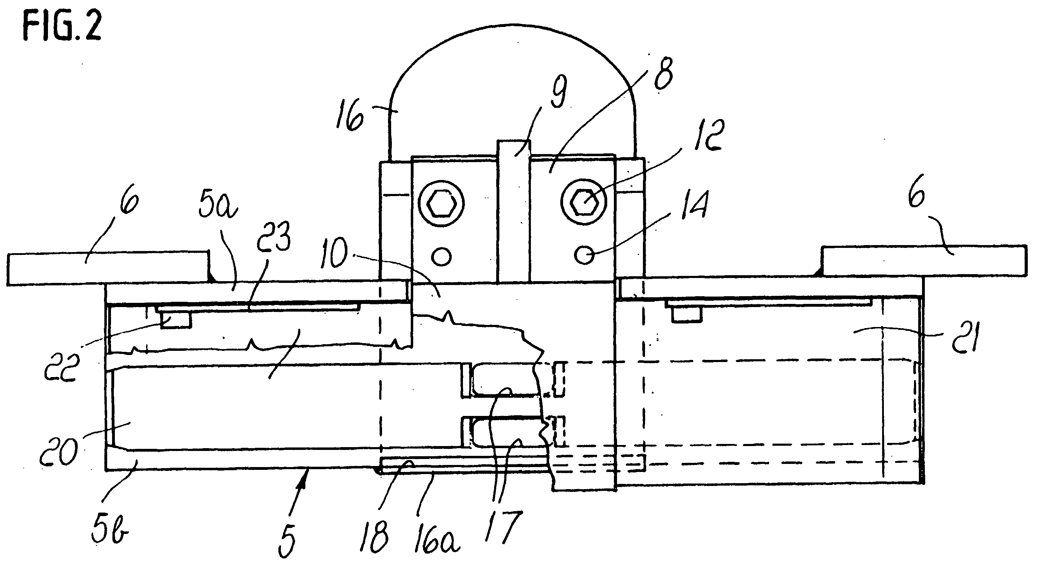

Figure 2 is a corresponding plan view thereof;
Figure 3 is a transverse sectional view thereof, taken along the plane designated by III-III in Figure 1;
Figure 4 is a bottom plan view of said cleaning air distribution means;
Figures 5 and 6 are, respectively, a sectional view and a transverse sectional view thereof, taken along the planes designated by V-V and VI-VI in Figure 4.

With reference to the above figures, the reference numeral 1 generally designates a device for cleaning a chain 2, particularly for use in dough driers. The chain 2 is of the type with rollers 3 articulated by means of pairs of link plates 4.

The device 1 has an L-shaped profiled element 5 for guiding the chain 2 to be cleaned. Two plates 6, provided with holes 7 for fixing to the frame of the machine, are fixed at the opposite ends to the rear of the guiding profiled element 5.

A plate 8 for distributing a stream of air for cleaning the chain 2 is associated with the guiding profiled element 5 in a median position; said stream is supplied under pressure by means of a duct 9 to a conveyance element 10 which is fixed above said distribution plate 8. The conveyance element 10 is constituted by a container which has a triangular profile, preferably has an apex angle of 90° and is welded above the distribution plate 8.

The distribution plate 8 is rigidly coupled, in an adjustable position, to an angular support 11 which is fixed at the rear to a back wall 5a of the guiding profiled element 5. The plate 8 is fastened to the support 11 by means of a pair of screws 12 which pass through corresponding slots 13 which are arranged transversely to the longitudinal axis of the guiding profiled element 5 and are formed on said plate 8. The plate 8 is also rigidly coupled to the support 11 by means of a pair of conical pins 14.

Conveniently, the pins 14 are inserted in the corresponding holes, formed in the chosen positions, after adjusting the position of the distribution plate 8 transversely to the guiding profiled element 5.

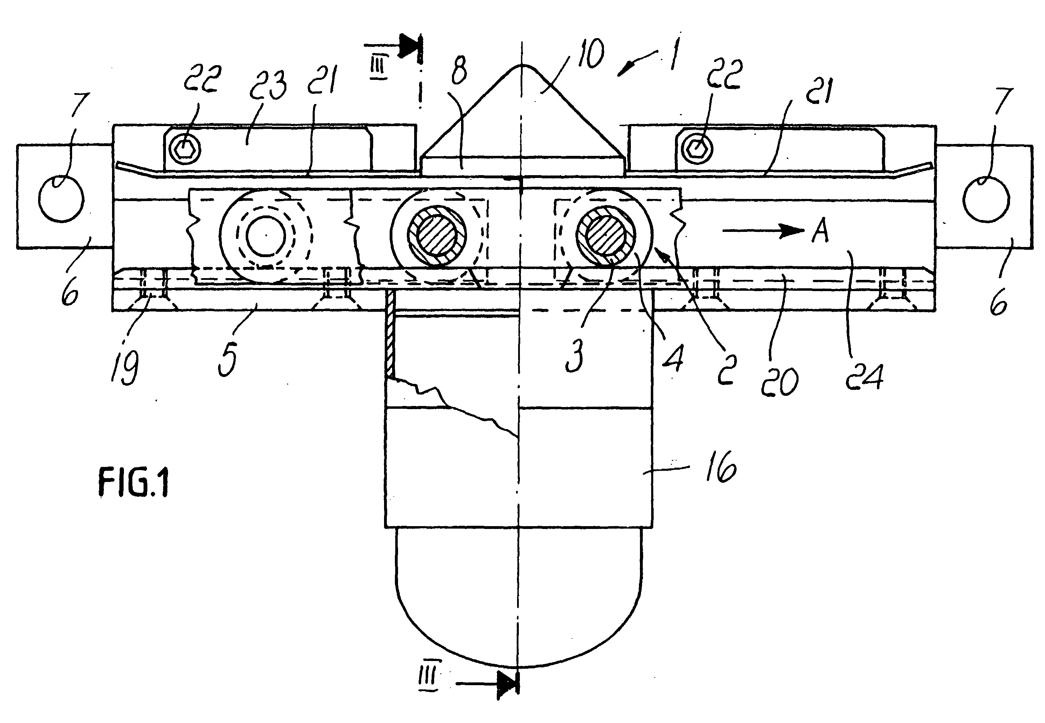

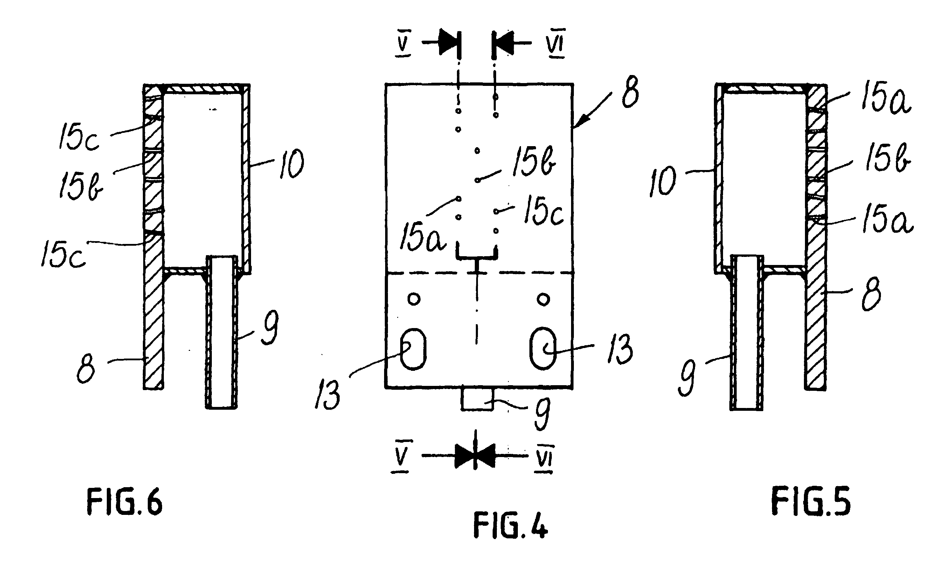

The plate 8 is provided with a series of holes which are suitable to produce controlled distribution of the cleaning air stream. More particularly, as shown in detail in Figures 4, 5 and 6, the plate 8 has, on successive transverse planes in the direction A (as shown in Figure 1), a first pair and a second pair of converging holes 15a, a third pair of parallel holes 15b, and a third pair and a fourth pair of converging holes 15c. The pair of parallel holes 15b is arranged substantially centrally with respect to the longitudinal advancement plane of the chain 2, at the rollers 3 of said chain, while the converging holes 15a and 15c are arranged symmetrically on either side of said plane, at the link plates 4 of said chain.

A tubular scoop 16 for the cleaning air is fixed at the distribution plate 8, below the base wall: 5b of the guiding profiled element 5, and is kept under slight suction.

The tubular scoop 16 is connected to a pair of openings 17 which are formed side by side longitudinally on the base 5b of the guiding profiled element 5. The base wall 5b of the profiled element 5 is also provided at its edge, on the outer side, with an additional longitudinal opening 18 delimited by a side wall 16a of the scoop 16; the opening 18 is narrower and longer than the pair of openings 17.

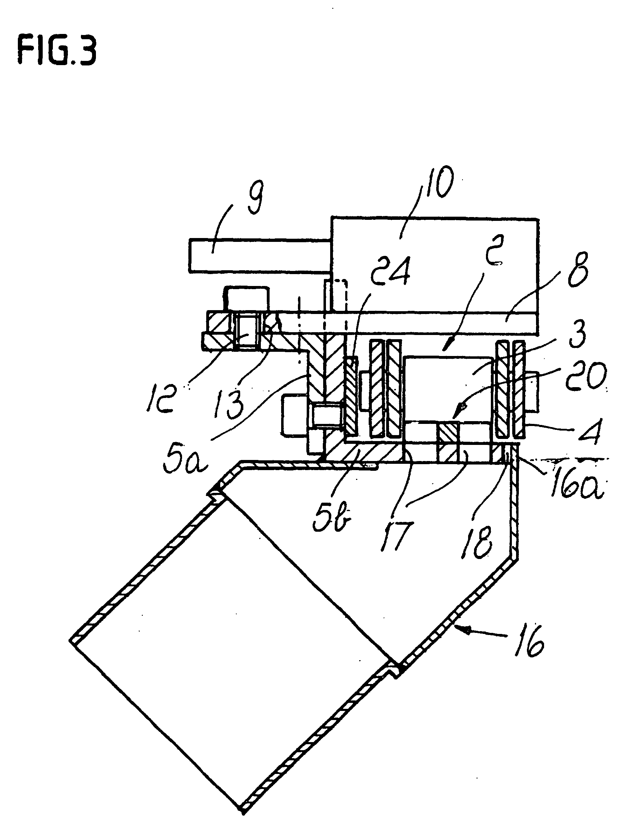

A longitudinal strip 20 is fixed, by means of suitable screws 19, to said base wall 5b of the guiding profiled element 5 and is suitable to act as guide for the sliding of the rollers 3 of the chain 2 to be cleaned (reference should be made particularly to Figure 3). The strip 20 has a suitably narrower region at the openings 17 of the wall 5b.

To the front and to the rear of the distribution plate 8, in the direction A in which the chain 2 to be cleaned advances, there are respective elements 21 for covering the guiding profiled element 5. The covering elements 21 are pivoted, by means of a pivot 22 which engages a corresponding flap 23 of the covering elements 21, to the back wall 5a of the guiding profiled element 5 and are substantially parallel to the base wall 5b of said profiled element.

Appropriate shims 24, suitable to avoid air seepage, are also fixed to the back wall 5a of the guiding profiled element 5.

The operation of the chain cleaning device is easily understandable from the above description.

The chain 2 advances, in the direction A, along the guiding profiled element 5, which is substantially channel-shaped. The rollers 3 of the chain 2 slide on the strip 20, which forms a sort of track for guiding the chain 2.

In order to clean the chain 2, a stream of compressed air is supplied to the conveyance device 10, which is closed by the distribution plate 8 which faces the guiding profiled element 5, at a short distance from the chain 2.

The air stream exits from the conveyance device 10 by means of the holes formed in the distribution plate 8 and flows through the chain 2 to be cleaned in different directions which are determined by the holes.

More particularly, the parallel holes 15b are suitable to direct the cleaning air stream onto the rollers 3 of the chain, while the converging holes 15a and 15c are suitable to direct the cleaning air stream onto the corresponding link plates 4.

It should be noted that the air stream is directed at the upper edge of the link plates 4 and therefore strikes them so as to ensure perfect cleaning thereof.

The cleaning air stream, after passing through the chain 2, is collected by the scoop 16 through the openings 17 and 18 formed on the base wall 5b of the guiding profiled element 5. The scoop 16 is kept under suction with a suction force which is slightly greater than the pressure of the air stream, for example by 5%, so as to assuredly prevent dispersion of the impurities collected by the air stream. The modest suction allows to avoid producing changes in the operating temperature in the tunnels of the drier.

The fact is noted that the cleaning air stream is directed by the distribution plate 8 which is directly adjacent to the chain 2; the chain 2 is furthermore enclosed by the covering elements 21 and by the shims 24 of the guiding profiled element 5 so as to avoid, in practice, any seepage of the air stream.

The device according to the invention accordingly achieves the aim of automatically cleaning chains, particularly in dough driers.

The fact is also noted that the device can be installed in-line in the machine, with limited bulk and without interfering with production steps. Depending on the extent of the impurities to be eliminated, the device can be activated at programmed time intervals so as to keep the chains constantly clean.

In the practical embodiment of the invention, the materials used, as well as the shapes and the dimensions, may be any according to the requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A chain cleaning device (1), comprising
- channel-like guiding means along which a chain (2) to be cleaned is suitable to travel,
- distributing means for distributing a stream of cleaning air which is supplied under pressure to a conveyance element (10) associated with said guiding means, at a short distance from said chain (2) to be cleaned, the air stream being adapted to pass through said chain (2) in different directions,
- the guiding means further comprising openings (17) opposite to the distributing means,
- a scoop (16) for said cleaning air stream, which is connected to the openings (17) formed in the guiding means, **characterized in that**
the distributing means comprise holes formed therein, which are disposed on successive transverse planes in the direction of advancement (A) of the chain (2).

2. A device according to claim 1, **characterized in that** said distributing means comprises a plate (8) which is adapted to close said conveyance element (10), in front of said guiding means, and is provided with a series of holes (15) which are adapted to produce a controlled distribution of said air stream to said chain (2) to be cleaned in said different directions.

3. A device according to claim 2, **characterized in that** said distribution plate (8) has, on successive transverse planes in the direction of advancement (A) of said chain (2), at least one first pair and one second pair of converging holes (15a) which are arranged symmetrically on either side of the longitudinal sliding plane of said chain (2), and a third pair of parallel holes (15b) which are arranged centrally with respect to said longitudinal plane.

4. A device according to claim 3, **characterized in that** said converging holes (15a) are adapted to direct said air stream at edges of the link plates (4) that connect the rollers (3) of said chain (2) so as to flow over said link plates (4).

5. A device according to claim 1, **characterized in that** said guiding means have a profiled element (5) to which said means for distributing said air stream are rigidly coupled in a central position, said profiled element (5) being provided, on a base wall (5b), with a longitudinal strip (20) adapted to act as a guide for the sliding of the rollers (3) of said chain (2).

6. A device according to claim 5, **characterized in that** said profiled element (5) has, in front and to the rear of said means for distributing said air stream, in the direction of advancement (A) of said chain (2), covering elements (21) which are parallel to said base wall (5b) of said profiled element (5).

## Patentansprüche

1. Vorrichtung (1) zum Reinigen von Ketten, die Folgendes umfasst:
- kanalförmige Führungsmittel, entlang denen eine zu reinigende Kette (2) laufen kann,
- Verteilungsmittel zur Verteilung eines Reinigungsluftstroms, der einem den Führungsmitteln zugeordneten Förderelement (10) unter Druck zugeführt werden kann, in einem kurzen Abstand von der zu reinigenden Kette (2), wobei der Luftstrom so angelegt ist, dass er in verschiedenen Richtungen durch die Kette (2) strömt,
- wobei die Führungsmittel weiterhin Öffnungen (17) gegenüber dem Verteilungsmittel umfassen,
- einen Stutzen (16) für den Reinigungsluftstrom, der mit den in den Führungsmitteln ausgebildeten Öffnungen (17) verbunden ist,
**dadurch gekennzeichnet, dass**
das Verteilungsmittel darin ausgebildete Löcher umfasst, die auf aufeinanderfolgenden Querebenen in Vorschubrichtung (A) der Kette (2) angeordnet sind.

2. Vorrichtung nach Anspruch 1, **dadurch gekennzeichnet, dass** das Verteilungsmittel eine Platte (8) umfasst, die zum Schließen des Förderelements (10) vor den Führungsmitteln ausgeführt und mit einer Reihe von Löchern (15) versehen ist, die zur Erzeugung einer kontrollierten Verteilung des Luftstroms zu der zu reinigenden Kette (2) in den verschiedenen Richtungen ausgeführt sind.

3. Vorrichtung nach Anspruch 2, **dadurch gekennzeichnet, dass** die Verteilungsplatte (8) auf in Vorschubrichtung (A) der Kette (2) aufeinanderfolgenden Querebenen mindestens ein erstes Paar und ein zweites Paar konvergierender Löcher (15a), die auf beiden Seiten der sich in Längsrichtung erstreckenden Gleitebene der Kette (2) angeordnet sind, und ein drittes Paar paralleler Löcher (15b), die bezüglich der Längsebene mittig angeordnet sind, aufweist.

4. Vorrichtung nach Anspruch 3, **dadurch gekennzeichnet, dass** die konvergierenden Löcher (15a) so ausgeführt sind, dass sie den Luftstrom an Rändern der Verbindungsplatten (4), die die Rollen (3) der Kette (2) verbinden, so leiten, dass er über die Verbindungsplatten (4) strömt.

5. Vorrichtung nach Anspruch 1, **dadurch gekennzeichnet, dass** die Führungsmittel ein profiliertes Element (5) aufweisen, mit dem das Mittel zur Verteilung des Luftstroms in einer mittleren Position starr verbunden ist, wobei das profilierte Element (5) an einer Basiswand (5b) mit einem Längsstreifen (20) vorgesehen ist, der so ausgeführt ist, dass er als eine Führung zum Gleiten der Rollen (3) der Kette (2) wirkt.

6. Vorrichtung nach Anspruch 5, **dadurch gekennzeichnet, dass** das profilierte Element (5) vor und hinter dem Mittel zur Verteilung des Luftstroms in Vorschubrichtung (A) der Kette (2) Abdeckelemente (21) aufweist, die sich parallel zur Basiswand (5b) des profilierten Elements (5) erstrecken.

## Revendications

1. Dispositif pour le nettoyage de chaînes (1) comprenant :
- des moyens de guidage semblables à un canal le long desquels une chaîne (2) à nettoyer est apte à se déplacer,
- des moyens de distribution pour distribuer un courant d'air de nettoyage qui est fourni sous pression à un élément de transport (10) associé auxdits moyens de guidage, à une courte distance de ladite chaîne (2) à nettoyer, le courant d'air étant adapté pour passer à travers ladite chaîne (2) dans différentes directions,
- les moyens de guidage comprenant en outre des ouvertures (17) opposées aux moyens de distribution,
- un déflecteur (16) pour ledit courant d'air de nettoyage, qui est relié aux ouvertures (17) formées dans les moyens de guidage, **caractérisé en ce que**
les moyens de distribution comprennent des trous formés à l'intérieur, qui sont disposés sur des plans transversaux successifs dans la direction d'avancement (A) de la chaîne (2).

2. Dispositif selon la revendication 1, **caractérisé en ce que** lesdits moyens de distribution comprennent un plateau (8) qui est adapté pour fermer ledit élément de transport (10), en face desdits moyens de guidage, et comprend une série de trous (15) qui sont adaptés pour permettre une distribution contrôlée dudit courant d'air à ladite chaîne (2) à nettoyer dans lesdites différentes directions.

3. Dispositif selon la revendication 2, **caractérisé en ce que** ledit plateau de distribution (8) possède, sur des plans transversaux successifs dans la direction d'avancement (A) de ladite chaîne (2), au moins une première paire et une deuxième paire de trous convergents (15a) qui sont disposés symétriquement des deux côtés du plan de coulissement longitudinal de ladite chaîne (2), et une troisième paire de trous parallèles (15b) qui sont disposés de manière centrale par rapport audit plan longitudinal.

4. Dispositif selon la revendication 3, **caractérisé en ce que** lesdits trous convergents (15a) sont adaptés pour diriger ledit courant d'air sur les bords des plaques de liaison (4) qui relient les rouleaux (3) de ladite chaîne (2) de manière à ce qu'il s'écoule sur lesdites plaques de liaison (4).

5. Dispositif selon la revendication 1, **caractérisé en ce que** lesdits moyens de guidage possèdent un élément profilé (5) auquel lesdits moyens pour distribuer ledit courant d'air sont couplés de manière rigide dans une position centrale, ledit élément profilé (5) étant muni, sur une paroi de base (5b), d'une bande longitudinale (20) adaptée pour agir comme un guide en vue du coulissement des rouleaux (3) de ladite chaîne (2).

6. Dispositif selon la revendication 5, **caractérisé en ce que** ledit élément profilé (5) possède, en face et à l'arrière desdits moyens pour distribuer ledit courant d'air, dans la direction d'avancement (A) de ladite chaîne (2), des éléments de recouvrement (21) qui sont parallèles à ladite paroi de base (5b) dudit élément profilé (5).
